(19) Europäisches Patentamt
European Patent Office
Office européen des brevets

(11) **EP 2 089 473 B1**

(12) **FASCICULE DE BREVET EUROPEEN**

(45) Date de publication et mention
de la délivrance du brevet:
**06.10.2010 Bulletin 2010/40**

(21) Numéro de dépôt: **07858677.3**

(22) Date de dépôt: **08.11.2007**

(51) Int Cl.:
***C08L 33/12*** *(2006.01)*

(86) Numéro de dépôt international:
**PCT/FR2007/052316**

(87) Numéro de publication internationale:
**WO 2008/059157 (22.05.2008 Gazette 2008/21)**

(54) **COMPOSITION METHACRYLIQUE PERMETTANT D'OBTENIR UN REVETEMENT AU TOUCHER RUGUEUX ET D'ASPECT MAT**

METHACRYLISCHE ZUSAMMENSETZUNG ZUR GEWINNUNG EINER BESCHICHTUNG MIT RAUER TEXTUR UND MATTER ERSCHEINUNG

METHACRYLIC COMPOSITION FOR OBTAINING A COATING HAVING A ROUGH TEXTURE AND A MATT APPEARANCE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **13.11.2006 FR 0654854**

(43) Date de publication de la demande:
**19.08.2009 Bulletin 2009/34**

(73) Titulaire: **ARKEMA FRANCE**
**92700 Colombes (FR)**

(72) Inventeurs:
• **DELPRAT, Patrick**
**64230 Lescar (FR)**
• **BERGE, Jérôme**
**64360 Monein (FR)**

(74) Mandataire: **Bonnel, Claudine**
**ARKEMA FRANCE**
**Département Propriété Industrielle**
**420, rue d'Estienne d'Orves**
**92705 Colombes Cedex (FR)**

(56) Documents cités:
**EP-A- 1 541 339    WO-A-03/037983**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine de l'invention

L'invention est relative à une composition méthacrylique qui permet d'obtenir un revêtement ayant un toucher rugueux, d'aspect mat, résistant à la rayure et aux UV. La composition comprend un polymère méthacrylique dans lequel sont dispersées des particules d'un polymère thermoplastique de diamètre moyen allant de 15 à 70 $\mu$m et des particules d'un polymère thermoplastique de diamètre moyen allant de 100 à 400 $\mu$m. Cette composition peut être extrudée ou coextrudée sur un polymère thermoplastique.

### Le problème technique

Le problème qu'entend résoudre l'invention est de mettre au point une composition qui, lorsqu'elle est extrudée ou coextrudée donne une surface au toucher rugueux, d'aspect mat résistant à la rayure et aux UV. La composition doit être facilement transformable dans les conditions habituelles de transformation c'est-à-dire qu'elle doit être facilement extrudable ou coextrudable sur un polymère thermoplastique. La pièce extrudée ou coextrudée doit aussi présenter une tenue mécanique suffisante. Le toucher rugueux et l'aspect mat peuvent être caractérisés/quantifiés respectivement par la rugosité et la brillance de la surface de la pièce extrudée ou coextrudée. Dans des conditions de transformation bien définies, la composition de l'invention permet d'obtenir un toucher rugueux caractérisé par une rugosité Ra>8 $\mu$m et un aspect mat quantifié par une brillance <10%, voire <4% (sous un angle de 60°).

### L'art antérieur

La demande internationale WO 01/12719 décrit une composition méthacrylique comprenant de 0,5 à 50% de particules dont la taille moyenne est supérieure à 100 $\mu$m comprenant du méthacrylate de méthyle (MAM) et éventuellement un comonomère, ces particules pouvant être réticulées. La composition peut être coextrudée selon le procédé capstock sur un polymère thermoplastique tel que le PVC.

La demande internationale WO 97/14749 décrit une composition méthacrylique comprenant des particules réticulées dont la taille moyenne va de 250 à 600 $\mu$m dispersées dans un poly(méthyl méthacrylate) (PMMA) obtenu par le procédé coulé.

Le brevet américain US 3,345,434 décrit une composition ayant un toucher rugueux obtenue en mélangeant un polymère thermoplastique non réticulé et des particules d'un polymère thermoplastique réticulé. Il peut s'agir par exemple d'un PMMA dans lequel sont dispersées des particules de PMMA réticulées.

Le brevet américain US 4,876,311 décrit une dispersion de particules réticulées dans un polymère thermoplastique dont le diamètre moyen peut varier entre 5 et 50 $\mu$m.

La demande européenne EP 1022115 décrit une composition méthacrylique ayant un aspect givré et une rugosité de surface comprenant des particules hautement réticulées comprenant du styrène et un (méth)acrylate d'alkyle ayant un diamètre moyen allant de 15 à 70 $\mu$m et une distribution de taille allant de 10 à 110 $\mu$m.

### Brève description de l'invention

L'invention est relative à une composition méthacrylique comprenant (100-x-y) parts d'au moins un polymère méthacrylique qui est un homo- ou copolymère de méthacrylate de méthyle (MAM) dans lequel sont dispersées :

- x parts de particules d'un polymère thermoplastique A comprenant le MAM comme monomère majoritaire qui est soit réticulé soit qui présente une masse moyenne en poids $M_w$ > 300000 g/mol, avantageusement > 400000 g/mol (par rapport à un étalon poly(méthyl méthacrylate) PMMA), de diamètre moyen en poids (ASTM D1921) > 100 $\mu$m, avantageusement > 250 $\mu$m et < 500 $\mu$m, avantageusement < 400 $\mu$m ;
- y parts de particules d'un polymère thermoplastique réticulé B comprenant le MAM comme monomère majoritaire, de diamètre moyen en poids (ASTM D1921) allant de 15 à 70 $\mu$m ;

telle que x varie de 2 à 20 et y varie de 10 à 25.

De préférence, on a x+y < 33. L'invention est aussi relative au procédé de coextrusion de la composition selon l'invention avec un polymère thermoplastique ainsi qu'à la structure multicouche comprenant une couche comprenant la composition méthacrylique selon l'invention et une couche du polymère thermoplastique. L'invention est aussi relative aux utilisations de la structure multicouche.

**Figures**

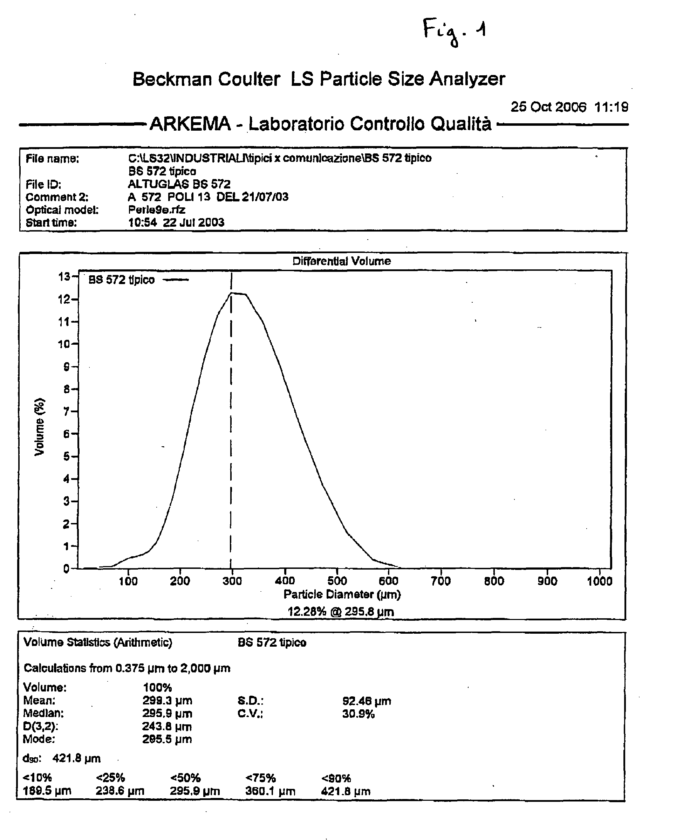

La figure 1 représente une courbe de distribution de tailles des particules du polymère A utilisées dans les exemples.

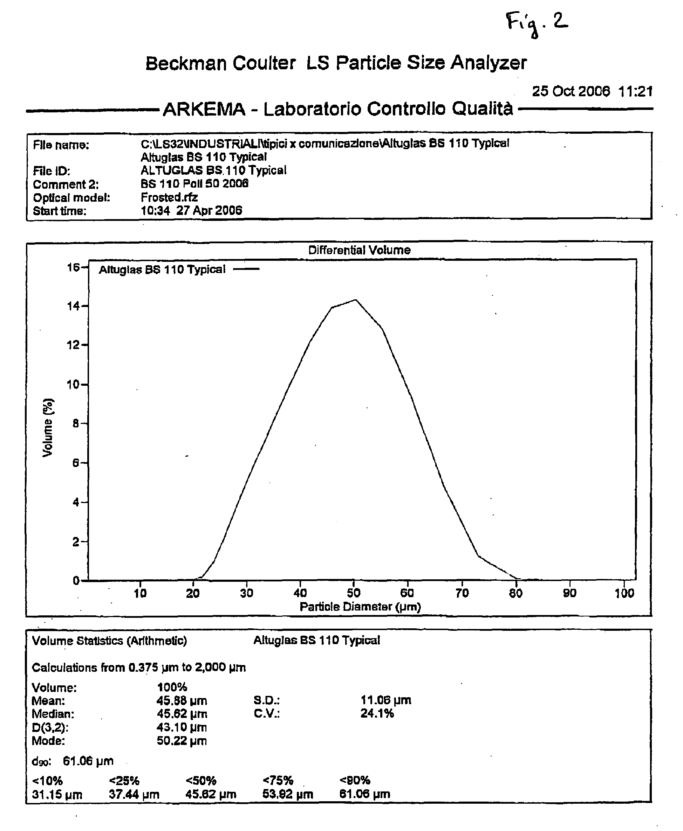

La figure 2 représente une courbe de distribution de tailles des particules du polymère B utilisées dans les exemples.

**Description détaillée de l'invention**

S'agissant du polymère méthacrylique, dans lequel sont dispersées les particules, celui-ci est un homo- ou copolymère du MAM, comprenant en poids au moins 50%, de préférence 75%, de MAM. Le copolymère est obtenu à partir du MAM et d'au moins un comonomère copolymérisable avec le MAM. De préférence, le copolymère comprend en poids de 70 à 99,5%, avantageusement de 80 à 99,5%, de préférence de 80 à 99% de MAM pour respectivement de 0,5 à 30%, avantageusement de 0,5 à 20%, de préférence de 1 à 20% de comonomère.

De préférence, le comonomère copolymérisable avec le MAM est un monomère (méth)acrylique ou un monomère vinylaromatique tel que par exemple le styrène, les styrènes substitués, l'alpha-méthylstyrène, le monochlorostyrène, le tertiobutyl styrène. De préférence, il s'agit d'un (méth)acrylate d'alkyle, notamment de l'acrylate de méthyle, d'éthyle, de propyle, de butyle, du méthacrylate de butyle.

Le polymère méthacrylique est préparé par polymérisation radicalaire selon les techniques connues de l'homme de l'art. La polymérisation peut être réalisée en solution, en masse, en émulsion ou en suspension. Le polymère méthacrylique peut aussi être préparé par polymérisation anionique. L'indice de fluidité à l'état fondu (MFI) du polymère méthacrylique va de préférence de 0,5 à 30 g/10 min (230°C, 3,8 kg). Un exemple de polymère méthacrylique utilisable est le grade ALTUGLAS® HFI-7 commercialisé par ALTUGLAS INT. dont les caractéristiques sont données dans les exemples.

On désigne par monomère (méth)acrylique, un monomère qui peut être :

- un monomère acrylique tel que les acrylates d'alkyle, l'alkyle étant de préférence en $C_1$-$C_{10}$, de cycloalkyle ou d'aryle tels que l'acrylate de méthyle, d'éthyle, de propyle, de n-butyle, d'isobutyle, de tertiobutyle, de 2-éthylhexyle, les acrylates d'hydroxyalkyle tels que l'acrylate de 2-hydroxyéthyle, les acrylates d'étheralkyle tels que l'acrylate de 2-méthoxyéthyle, les acrylates d'alcoxy- ou aryloxypolyalkylèneglycol tels que les acrylates de méthoxypolyéthylèneglycol ou d'éthoxypolyéthylèneglycol, les acrylates d'aminoalkyle tels que l'acrylate de 2-(diméthylamino)éthyle, les acrylates silylés, l'acrylate de glycidyle ;
- un monomère méthacrylique tel que, les méthacrylates d'alkyle, l'alkyle étant de préférence en $C_2$-$C_{10}$, de cycloalkyle ou d'aryle tels que le méthacrylate d'éthyle, de propyle, de n-butyle, d'isobutyle, de tertiobutyle, de 2-éthylhexyle, les méthacrylates d'hydroxyalkyle tels que le méthacrylate de 2-hydroxyéthyle, les méthacrylates d'étheralkyle tels que le méthacrylate de 2-méthoxyéthyle, les méthacrylates d'alcoxy- ou aryloxypolyalkylèneglycol tels que les méthacrylates de méthoxypolyéthylèneglycol ou d'éthoxy-polyéthylèneglycol, les méthacrylates d'aminoalkyle tels que le méthacrylate de 2-(diméthylamino)éthyle, les méthacrylates silylés, le méthacrylate de glycidyle.

S'agissant des particules du polymère thermoplastique A, celles-ci se caractérisent par un diamètre moyen en poids (selon ASTM D1921) > 100 $\mu$m, avantageusement > 250 $\mu$m. Le diamètre moyen en poids est aussi < 500 $\mu$m, avantageusement < 400 $\mu$m. Ces particules peuvent être préparées par exemple par polymérisation en suspension. Les particules peuvent aussi être obtenues en broyant une pièce telle qu'une plaque ou des granulés composés du polymère A. Selon le procédé d'obtention, elles peuvent être sphériques ou sensiblement sphériques ou avoir une forme plus irrégulière. De préférence, elles sont préparées par polymérisation en suspension et présentent une forme sphérique ou sensiblement sphérique. De plus, la distribution de taille présente avantageusement une déviation standard d'au plus 40%, de préférence d'au plus 35% (par rapport au diamètre moyen). Ceci permet d'obtenir une rugosité plus homogène.

Le polymère A est soit réticulé soit il est de haut poids moléculaire c'est-à-dire qu'il présente une masse moyenne en poids $M_w$ > 300000 g/mol, avantageusement > 400000 g/mol (étalon PMMA). Ceci permet aux particules de conserver leur intégrité lors du compoundage avec le polymère méthacrylique. On préfère toutefois un polymère de haut poids moléculaire à un polymère réticulé car alors les particules peuvent s'écraser et fondre légèrement, ce qui contribue à un aspect de surface plus homogène.

Le polymère A comprend le MAM comme monomère majoritaire, c'est-à-dire comprenant en poids plus de 65%, avantageusement plus de 75% de MAM. Il peut s'agir d'un poly(méthyl méthacrylate) (PMMA) ou d'un copolymère du MAM et d'au moins un comonomère copolymérisable par voie radicalaire avec le MAM. Le comonomère peut être un vinylaromatique tel que par exemple le styrène et/ou un monomère (méth)acrylique.

S'agissant des particules du polymère thermoplastique B, celles-ci présentent un diamètre moyen en poids (selon ASTM D1921) allant de 15 à 70 $\mu$m. Selon le procédé d'obtention, elles peuvent être sphériques ou sensiblement sphériques ou avoir une forme plus irrégulière. De préférence, elles sont préparées par polymérisation en suspension et présentent une forme sphérique ou sensiblement sphérique. De plus, la distribution de taille présente avantageusement une déviation standard d'au plus 40%, de préférence d'au plus 30% (par rapport au diamètre moyen). Ceci permet d'obtenir une homogénéïté dans l'aspect de surface.

Pour certaines applications, le revêtement est rendu translucide et présente un aspect givré (« frosted » en anglais) ; pour cela, on fait en sorte que les indices de réfraction des particules du polymère B et du polymère méthacrylique diffèrent (à 20°C) de plus de 0,02 (ISO R-489).

Le polymère B comprend le MAM comme monomère majoritaire, c'est-à-dire comprenant en poids plus de 65%, avantageusement plus de 75% de MAM. Le polymère peut être un poly(méthyl méthacrylate) (PMMA) ou un copolymère du MAM et d'au moins un comonomère copolymérisable par voie radicalaire avec le MAM. Le comonomère peut être un vinylaromatique tel que par exemple le styrène et/ou un monomère (méth)acrylique. L'homme du métier adapte la composition des particules de façon à obtenir la différence recherchée entre les indices de réfraction polymère méthacrylique / particules. On peut estimer l'indice de réfraction d'un copolymère XY à l'aide de la formule $n_{XY} = C_X n_X + C_Y n_Y$ dans laquelle $C_X$ et $C_Y$ désignent les teneurs pondérales des deux monomères X et Y et $n_X$ et $n_Y$ les indices de réfraction des homopolymères de X et de Y (voir Polymer Handbook, 2ème édition, 1975, Wiley, « Refractive indices of polymers », III-241).

La réticulation est obtenue en utilisant au moins un agent réticulant qui peut par exemple être un (méth)acrylate d'allyle, le divinyl benzène, un di- ou triméthacrylate tel que le diméthacrylate de polyéthylèneglycol. De préférence, les particules sont hautement réticulées de façon à conserver leur intégrité lors du compoundage avec le polymère méthacrylique, c'est-à-dire qu'elles sont insolubles dans un solvant organique polaire tel que le tétrahydrofurane (THF) ou le chlorure de méthylène. C'est pourquoi de préférence la teneur en agent réticulant dans les particules est supérieure à 0,6%, avantageusement supérieure à 0,8%.

De façon préférée, le polymère B comprend en poids de 15 à 35% de styrène et de 65 à 85% de MAM. Des exemples de préparation de particules B sont donnés dans les exemples 2A, 2B et 2C du brevet EP 1022115 B1. Dans ces exemples, les particules se présentent sous forme de particules sensiblement sphériques et comprennent environ 25% de styrène et 75% de MAM.

S'agissant de la composition méthacrylique, celle-ci comprend x parts de particules du polymère A et y parts de particules du polymère B dispersées dans (100-x-y) parts d'au moins un polymère méthacrylique. De préférence, on a x+y < 33. Le nombre de parts x varie de 2 à 20 et le nombre de parts y varie de 10 à 25. Avantageusement, x varie de 3 à 10 et de préférence de 3 à 8. De même, avantageusement y varie de 15 à 25, de préférence de 17 à 23.

On peut préparer la composition en dispersant les particules dans le polymère méthacrylique (matrice) à l'état fondu (compoundage). On utilise pour cela par exemple une extrudeuse ou un malaxeur. On préfère utiliser l'extrusion de façon à récupérer des granulés qui sont ensuite transformés par exemple par coextrusion sur un polymère thermoplastique.

La composition méthacrylique une fois extrudée ou coextrudée permet d'obtenir une surface :

- ayant un toucher rugueux, semblable au toucher rugueux de certaines pièces métalliques comme des tôles en aluminium (ou de certaines pièces en matière thermoplastique) ;
- ayant un rugosité Ra > 8 $\mu$m ;
- ayant un aspect mat homogène (brillance < 10%, avantageusement < 8%, de préférence < 4% sous un angle de 60°) ;
- résistant à la rayure et aux UV.

Ceci est obtenu par la dispersion dans le polymère méthacrylique des particules dans les proportions indiquées ci-dessus. Le toucher rugueux est dû principalement aux particules du polymère A et n'est obtenu qu'à la condition d'avoir un minimum de 2 parts de particules du polymère A. Les particules du polymère B participent également au toucher rugueux mais à un degré moindre. L'aspect mat homogène est dû principalement aux particules du polymère B et n'est obtenu qu'à la condition d'avoir un minimum de 10 parts de particules du polymère B. Les particules A participent également à la matité (et aussi indirectement par l'augmentation de la rugosité). On a donc x+y<45 mais de façon à conserver les propriétés mécaniques du polymère méthacrylique et son aptitude à la transformation; on préfère limiter la teneur totale en particules à 33 parts (x+y<33).

Les particules se dispersent plus efficacement dans le polymère méthacrylique que des particules d'une charge minérale telle que par exemple la silice, l'alumine ou le talc. D'autre part, les propriétés de mise en forme et de transformation, ainsi que les propriétés optiques, sont moins affectées en présence de ces particules qu'en présence de particules d'une charge minérale. Pour ce qui est des propriétés optiques, la composition conserve une certaine transparence par rapport au polymère méthacrylique alors qu'une charge minérale provoque une opacification importante.

Une autre fonction des particules du polymère B est de réduire ou d'éliminer les stries longitudinales (ou autres défauts de surface) qui sont produites lors du passage de la composition à travers la filière et/ou le conformateur lors d'extrusion ou de la coextrusion. Le nombre de défauts dépend de la qualité de l'outillage.

La composition méthacrylique peut aussi comprendre un ou plusieurs additif(s) usuel(s) choisi(s) parmi les antioxydants, les antistatiques, les ignifugeants, les pigments et/ou colorants, les modifiants chocs,... Il n'est pas exclu que l'additif soit un polymère comme par exemple du PVDF ou un copolymère à blocs polyéther-polyamide du type PEBAX.

S'agissant du polymère thermoplastique qui est coextrudé avec la composition selon l'invention, celui-ci peut être par exemple un polyester saturé tel que le polyéthylène téréphtalate PET ou PETg ou le polybutylène téréphtalate PBT, l'ABS (terpolymère acrylonitrile-butadiène-styrène), le SAN (copolymère styrène-acrylonitrile), l'ASA (copolymère acrylique-styrène-acrylonitrile), un polystyrène PS (cristal ou choc), un polypropylène (PP), un polyéthylène (PE), le polycarbonate (PC), le polyphénylène oxyde PPO, une polysulphone, un polymère du chlorure de vinyle tel que le PVC, le PVC chloré (PVCC) ou le PVC expansé. Il peut s'agir aussi d'un mélange de deux ou plusieurs polymères thermoplastiques de la liste précédente. Par exemple, il peut s'agir d'un mélange PPO/PS ou PC/ABS.

L'invention est aussi relative au procédé de coextrusion consistant à superposer dans l'ordre :

- une couche (I) comprenant la composition méthacrylique selon l'invention,
- une couche (II) comprenant au moins un polymère thermoplastique.

Eventuellement entre les couches (I) et (II), on peut disposer une couche intermédiaire (c'est-à-dire que l'on a dans l'ordre disposées l'une contre l'autre : couche (I) / couche intermédiaire / couche (II)). Celle-ci peut avoir par exemple pour fonction d'assurer l'adhésion entre les deux couches (I) et (II). Un exemple de couche intermédiaire assurant l'adhésion entre les couches est donné par exemple dans WO 2006053984.

L'invention est aussi relative à une structure multicouche comprenant :

- une couche (I) comprenant la composition méthacrylique selon l'invention,
- une couche (II) comprenant le polymère thermoplastique,

ainsi qu'une éventuelle couche intermédiaire disposée entre les couches (I) et (II).

Ce procédé est notamment adapté pour la fabrication de lames extrudées pleines ou de profilés creux en polymère thermoplastique, notamment en PVC ou en ABS. La structure multicouche, notamment sous forme de lames et profilés, trouve des applications dans la fabrication de panneaux, bardages, bordures de jardin, fenêtres, volets, ... L'invention est aussi relative à ces lames et profilés ainsi qu'à leurs utilisations.

L'épaisseur de la couche (I) est en général plus faible que celle de la couche (II) et varie après la coextrusion de préférence de 100 à 1000 $\mu$m. Cette épaisseur peut varier lorsque la structure multicouche est éventuellement transformée dans une étape ultérieure comme par exemple dans une étape de thermoformage.

### Exemples

### Produits utilisés

particules A : on a utilisé le grade BS-572 (poly(méthyl méthacrylate)) commercialisé par ALTUGLAS INT.

diamètre moyen : 300 $\mu$m
température de transition vitreuse : 114°C
densité apparente : 0,7 g/cm$^3$
viscosité intrinsèque : 170 cm$^3$/g

particules B : on a utilisé le grade BS-110 commercialisé par ALTUGLAS INT.

diamètre moyen : 50 $\mu$m
température de transition vitreuse : 108°C
densité apparente : 0,6 g/cm$^3$

polymère méthacrylique (PMMA) : on a utilisé le grade HFI-7 commercialisé par ALTUGLAS INT. :

indice de fluidité à chaud : 10 g/10 min (230°C, 3,8 kg)

indice de réfraction (ASTM D542) : 1,49

haze (ASTM D1003) : < 2%

**Extrusion et coextrusion**

Les particules A et B ont été dispersées dans les proportions visées dans le tableau I à l'aide d'un mélangeur BUSS pour obtenir des granulés de la composition méthacrylique. On a ensuite coextrudé la composition précédente sur un PVC rigide pour obtenir des profilés extrudés alvéolaires de type clôture de jardin dont la paroi interne est composée de deux couches (I) et (II). La couche (I) présente une épaisseur de 200 µm environ et la couche (II) (PVC) de 1,5 mm en moyenne.

**Mesures effectuées**

Brillance : on a utilisé un appareil BYK-GARDNER et la brillance a été mesurée selon la norme ASTM D523

Rugosité de surface : on a utilisé un profilomètre mécanique DEKTAK 8 de VEECO. Ra désigne la rugosité moyenne arithmétique et se calcule à l'aide de la formule :

$$Ra = \frac{1}{L_m} \int_{0}^{L_m} |y| \, dx$$

Rq désigne la rugosité moyenne quadratique et se calcule à l'aide de la formule :

$$Rq = \sqrt{\frac{1}{L_m} \int_{0}^{L_m} y^2 \, dx}$$

On trouvera plus de détails dans la norme DIN 4768/1.

Longueur de balayage : 10 mm

Durée de balayage : 90 s

Force d'appui : 5 mg

Les mesures sont faites à l'aide de 5 balayages par échantillon.

**Tableau I**

| Ex. | PMMA | Part. A (« grosses particules ») | Part. B (« petites particules ») | Brillance à 60°, (%) (ASTM D 523) | Rugosité moyenne Ra (µm) | Rugosité moyenne Rq (µm) |
|---|---|---|---|---|---|---|
| 1 (comp.) | 80% | 20% | 0% | 12 | 8,8 | 11,3 |
| 2 (comp.) | 70% | 30% | 0% | 8 | 11,6 | 14,6 |
| 3 (inv) | 80% | 10% | 10% | 4,5 | 10,2 | 12,8 |
| 4 (comp.) | 82% | 0% | 18% | 3 | 6,0 | 7,2 |

(suite)

| Ex. | PMMA | Part. A (« grosses particules ») | Part. B (« petites particules ») | Brillance à 60°, (%) (ASTM D 523) | Rugosité moyenne Ra ($\mu$m) | Rugosité moyenne Rq ($\mu$m) |
|---|---|---|---|---|---|---|
| 5 (inv.) | 75% | 5% | 20% | 2 | 9,9 | 12,3 |

| Commentaires |
|---|
| Ex.1 : le produit ne présente pas une brillance < 4%<br>Ex.2 : si l'on augmente la proportion de particules A, la brillance diminue mais reste > 4%<br>Ex.4 : lorsqu'on n'utilise que des particules B, on obtient une rugosité < 8 $\mu$m |

**Revendications**

1. Composition méthacrylique comprenant (100-x-y) parts d'au moins un polymère méthacrylique qui est un homo- ou copolymère de méthacrylate de méthyle (MAM) dans lequel sont dispersées :

   - x parts de particules d'un polymère thermoplastique A comprenant le MAM comme monomère majoritaire qui est soit réticulé soit qui présente une masse moyenne en poids $M_w$ > 300000 g/mol, avantageusement > 400000 g/mol (par rapport à un étalon poly(méthyl méthacrylate) PMMA), de diamètre moyen en poids (ASTM D1921) > 100 $\mu$m, avantageusement > 250 $\mu$m et < 500 $\mu$m, avantageusement < 400 $\mu$m ;
   - y parts de particules d'un polymère thermoplastique réticulé B comprenant le MAM comme monomère majoritaire, de diamètre moyen en poids (ASTM D1921) allant de 15 à 70 $\mu$m ;

   telle que x varie de 2 à 20 et y varie de 10 à 25.

2. Composition selon la revendication 1 dans laquelle x+y < 33.

3. Composition selon la revendication 1 ou 2 dans laquelle x varie de 3 à 10, de préférence de 3 à 8.

4. Composition selon l'une des revendications 1 à 3 dans laquelle y varie de 15 à 25, de préférence de 17 à 23.

5. Composition selon l'une des revendications 1 à 4 **caractérisée par** une rugosité arithmétique Ra > 8 $\mu$m.

6. Composition selon l'une des revendications 1 à 5 **caractérisée par** une brillance < 10%, de préférence < 4% sous un angle de 60°.

7. Composition selon l'une des revendications 1 à 6 dans laquelle la distribution de taille des particules du polymère thermoplastique A présente une déviation standard d'au plus 40%.

8. Composition selon l'une des revendications 1 à 7 dans laquelle le polymère thermoplastique A comprend en poids plus de 65%, avantageusement plus de 75% de MAM.

9. Composition selon la revendication 8 dans laquelle le polymère thermoplastique A est un poly(méthyl méthacrylate) ou un copolymère du MAM et d'au moins un comonomère copolymérisable par voie radicalaire avec le MAM.

10. Composition selon l'une des revendications 1 à 9 dans laquelle la distribution de taille des particules du polymère thermoplastique B présente une déviation standard d'au plus 40%.

11. Composition selon l'une des revendications 1 à 10 dans laquelle le polymère thermoplastique B est un polymère réticulé comprenant en poids plus de 65%, avantageusement plus de 75% de MAM.

12. Composition selon la revendication 11 dans laquelle le polymère thermoplastique B est un poly(méthyl méthacrylate) ou un copolymère du MAM et d'au moins un comonomère copolymérisable par voie radicalaire avec le MAM.

13. Composition selon l'une des revendications 11 ou 12 dans laquelle le polymère thermoplastique B comprend en poids de 15 à 35% de styrène et de 65 à 85% de MAM.

**14.** Structure multicouche comprenant :

  • une couche (I) comprenant la composition méthacrylique selon l'une quelconque des revendications 1 à 13,
  • une couche (II) comprenant au moins un polymère thermoplastique,

ainsi qu'une éventuelle couche intermédiaire disposée entre les couches (I) et (II).

**15.** Structure selon la revendication 14 dans laquelle le polymère thermoplastique est un polyester saturé, un terpolymère acrylonitrile-butadiène-styrène (ABS), un copolymère styrène-acrylonitrile (SAN), un copolymère acrylique-styrène-acrylonitrile (ASA), un polystyrène, un polypropylène, un polyéthylène, le polycarbonate, un polyphénylène oxyde (PPO), une polysulphone, un polymère du chlorure de vinyle (PVC) ou PVC chloré (PVCC) ou le PVC expansé.

**16.** Structure selon l'une des revendications 14 ou 15 sous forme de lame extrudée pleine ou de profilé creux.

**17.** Utilisation de la structure multicouche telle que définie à l'une quelconque des revendications 14 à 16 dans la fabrication de panneaux, bardages, bordures de jardin, fenêtres et volets.

**18.** Procédé de coextrusion consistant à superposer dans l'ordre :

  • une couche (I) comprenant la composition méthacrylique selon l'une quelconque des revendications 1 à 13,
  • une couche (II) comprenant au moins un polymère thermoplastique,

ainsi qu'une éventuelle couche intermédiaire disposée entre les couches (I) et (II).

**Claims**

**1.** Methacrylic composition comprising (100-x-y) parts of at least one methacrylic polymer that is a homopolymer or copolymer of methyl methacrylate (MMA), dispersed in which are:

  - x parts of particles of a thermoplastic polymer A comprising MMA as the main monomer that is either crosslinked or that has a weight-average molecular weight $M_w$ > 300 000 g/mol, advantageously > 400 000 g/mol (relative to a polymethyl methacrylate PMMA standard), with a weight-average diameter (ASTM D1921) > 100 $\mu$m, advantageously > 250 $\mu$m and < 500 $\mu$m, advantageously < 400 $\mu$m;
  - y parts of particles of a crosslinked thermoplastic polymer B comprising MMA as the main monomer, with a weight-average diameter (ASTM D1921) ranging from 15 to 70 $\mu$m;

such that x varies from 2 to 20 and y varies from 10 to 25.

**2.** Composition according to Claim 1, in which x+y < 33.

**3.** Composition according to Claim 1 or 2, in which x varies from 3 to 10, preferably from 3 to 8.

**4.** Composition according to one of Claims 1 to 3, in which y varies from 15 to 25, preferably from 17 to 23.

**5.** Composition according to one of Claims 1 to 4, **characterized by** an arithmetic mean roughness Ra > 8 $\mu$m.

**6.** Composition according to one of Claims 1 to 5, **characterized by** a gloss < 10%, preferably < 4% at an angle of 60°.

**7.** Composition according to one of Claims 1 to 6, in which the size distribution of the thermoplastic polymer A particles has a standard deviation of at most 40%.

**8.** Composition according to one of Claims 1 to 7, in which the thermoplastic polymer A comprises, by weight, more than 65%, advantageously more than 75% of MMA.

**9.** Composition according to Claim 8, in which the thermoplastic polymer A is a polymethyl methacrylate or a copolymer of MMA and at least one comonomer that is copolymerizable with MMA by radical processing.

**10.** Composition according to one of Claims 1 to 9, in which the size distribution of the thermoplastic polymer B particles has a standard deviation of at most 40%.

**11.** Composition according to one of Claims 1 to 10, in which the thermoplastic polymer B is a crosslinked polymer comprising, by weight, more than 65%, advantageously more than 75% of MMA.

**12.** Composition according to Claim 11, in which the thermoplastic polymer B is a polymethyl methacrylate or a copolymer of MMA and at least one comonomer that is copolymerizable with MMA by radical processing.

**13.** Composition according to either of Claims 11 and 12, in which the thermoplastic polymer B comprises, by weight, from 15 to 35% of styrene and from 65 to 85% of MMA.

**14.** Multilayer structure comprising:

  • a layer (I) comprising the methacrylic composition according to any one of Claims 1 to 13; and
  • a layer (II) comprising at least one thermoplastic polymer,

and also an optional interlayer placed between layers (I) and (II).

**15.** Structure according to Claim 14, in which the thermoplastic polymer is a saturated polyester, an acrylonitrile-butadiene-styrene terpolymer (ABS), a styrene-acrylonitrile copolymer (SAN), an acrylonitrile-styrene-acrylate copolymer (ASA), a polystyrene, a polypropylene, a polyethylene, polycarbonate, a polyphenylene oxide (PPO), a polysulphone, a vinyl chloride polymer (PVC), or chlorinated PVC (CPVC) or expanded PVC.

**16.** Structure according to either of Claims 14 and 15, in the form of a solid extruded strip or hollow profile.

**17.** Use of the multilayer structure as defined in any one of Claims 14 to 16, in the manufacture of panels, cladding, garden edging, windows and shutters.

**18.** Coextrusion process consisting in superposing, in order:

  • a layer (I) comprising the methacrylic composition according to any one of Claims 1 to 13; and
  • a layer (II) comprising at least one thermoplastic polymer,

and also an optional interlayer placed between layers (I) and (II).

**Patentansprüche**

**1.** Methacrylzusammensetzung, enthaltend (100-x-y) Teile mindestens eines Methacrylpolymers, bei dem es sich um ein Homo- oder Copolymer von Methylmethacrylat (MMA) handelt, in dem:

  - x Teile von Teilchen eines thermoplastischen Polymers A, das als Hauptmonomer MMA enthält und entweder vernetzt ist oder eine gewichtsmittlere Molmasse $M_w$ > 300.000 g/mol, vorteilhafterweise > 400.000 g/mol (bezogen auf einen Poly(methylmethacrylat)-Standard (PMMA-Standard) aufweist, mit einem gewichtsmittleren Durchmesser (ASTM D1921) > 100 $\mu$m, vorteilhafterweise > 250 $\mu$m, und < 500 $\mu$m, vorteilhafterweise < 400 $\mu$m;
  - y Teile von Teilchen eines vernetzten thermoplastischen Polymers B, das als Hauptmonomer MMA enthält, mit einem gewichtsmittleren Durchmesser (ASTM D1921) von 15 bis 70 $\mu$m;

dispergiert sind, so daß x von 2 bis 20 variiert und y von 10 bis 25 variiert.

**2.** Zusammensetzung nach Anspruch 1, worin x+y<33.

**3.** Zusammensetzung nach Anspruch 1 oder 2, worin x von 3 bis 10 und vorzugsweise 3 bis 8 variiert.

**4.** Zusammensetzung nach einem der Ansprüche 1 bis 3, worin x von 15 bis 25 und vorzugsweise von 17 bis 23 variiert.

**5.** Zusammensetzung nach einem der Ansprüche 1 bis 4, **gekennzeichnet durch** einen Mittenrauwert Ra > 8 $\mu$m.

**6.** Zusammensetzung nach einem der Ansprüche 1 bis 5, **gekennzeichnet durch** einen Glanz < 10%, vorzugsweise < 4%, in einem Winkel von 60°.

**7.** Zusammensetzung nach einem der Ansprüche 1 bis 6, worin die Größenverteilung der Teilchen des thermoplastischen Polymers A eine Standardabweichung von höchstens 40% aufweist.

**8.** Zusammensetzung nach einem der Ansprüche 1 bis 7, worin das thermoplastische Polymer A mehr als 65 Gew.-%, vorteilhafterweise mehr als 75 Gew.-%, MMA enthält.

**9.** Zusammensetzung nach Anspruch 8, worin es sich bei dem thermoplastischen Polymer A um ein Poly-(methylmethacrylat) oder ein Copolymer von MMA und mindestens einem mit MMA radikalisch copolymerisierbaren Comonomer handelt.

**10.** Zusammensetzung nach einem der Ansprüche 1 bis 9, worin die Größenverteilung der Teilchen des thermoplastischen Polymers B eine Standardabweichung von höchstens 40% aufweist.

**11.** Zusammensetzung nach einem der Ansprüche 1 bis 10, worin es sich bei dem thermoplastischen Polymer B um ein vernetztes Polymer, das mehr als 65 Gew.-%, vorteilhafterweise mehr als 75 Gew.-%, MMA enthält, handelt.

**12.** Zusammensetzung nach Anspruch 11, worin es sich bei dem thermoplastischen Polymer B um ein Poly-(methylmethacrylat) oder ein Copolymer von MMA und mindestens einem mit MMA radikalisch copolymerisierbaren Comonomer handelt.

**13.** Zusammensetzung nach einem der Ansprüche 11 oder 12, worin das thermoplastische Polymer B 15 bis 35 Gew.-% Styrol und 65 bis 85 Gew.-% MMA enthält.

**14.** Mehrschichtstruktur mit:

  • einer Schicht (I), umfassend die Methacrylzusammensetzung nach einem der Ansprüche 1 bis 13,
  • einer Schicht (II), umfassend mindestens ein thermoplastisches Polymer,

sowie einer fakultativen Zwischenschicht zwischen den Schichten (I) und (II).

**15.** Struktur nach Anspruch 14, worin es sich bei dem thermoplastischen Polymer um einen gesättigten Polyester, ein Acrylnitril-Butadien-Styrol-Terpolymer (ABS-Terpolymer), ein Styrol-Acrylnitril-Copolymer (SAN-Copolymer), ein Acryl-Styrol-Acrylnitril-Copolymer (ASA-Copolymer), ein Polystyrol, ein Polypropylen, ein Polyethylen, Polycarbonat, ein Polyphenylenoxid (PPO), ein Polysulfon, ein Polymer von Vinylchlorid (PVC) oder chloriertes PVC (CPVC) oder expandiertes PVC handelt.

**16.** Struktur nach einem der Ansprüche 14 oder 15 in Form eines massiven extrudierten Streifens oder Hohlprofils.

**17.** Verwendung der Mehrschichtstruktur gemäß einem der Ansprüche 14 bis 16 bei der Herstellung von Tafeln, Verkleidungen, Garteneinfassungen, Fenstern und Fensterläden.

**18.** Coextrusionsverfahren, bei dem man in der angegebenen Reihenfolge:

  • eine Schicht (I), umfassend die Methacrylzusammensetzung nach einem der Ansprüche 1 bis 13,
  • eine Schicht (II), umfassend mindestens ein thermoplastisches Polymer,

sowie eine fakultative Zwischenschicht zwischen den Schichten (I) und (II) übereinanderlagert.

Fig. 1

Beckman Coulter LS Particle Size Analyzer

25 Oct 2006 11:19

———————— ARKEMA - Laboratorio Controllo Qualità ————————

| File name: | C:\LS32\INDUSTRIALI\tipici x comunicazione\BS 572 tipico |
| | BS 572 tipico |
| File ID: | ALTUGLAS BS 572 |
| Comment 2: | A 572 POLI 13 DEL 21/07/03 |
| Optical model: | Perle9e.rfz |
| Start time: | 10:54 22 Jul 2003 |

Differential Volume

BS 572 tipico

12.28% @ 295.8 μm

Volume Statistics (Arithmetic)     BS 572 tipico

Calculations from 0.375 μm to 2,000 μm

| Volume: | 100% | | |
| Mean: | 299.3 μm | S.D.: | 92.46 μm |
| Median: | 295.9 μm | C.V.: | 30.9% |
| D(3,2): | 243.8 μm | | |
| Mode: | 295.5 μm | | |

$d_{90}$: 421.8 μm

| <10% | <25% | <50% | <75% | <90% |
| 189.5 μm | 238.6 μm | 295.9 μm | 360.1 μm | 421.8 μm |

Fig. 2

# Beckman Coulter LS Particle Size Analyzer

25 Oct 2006  11:21

———————————ARKEMA - Laboratorio Controllo Qualità ———————

| File name: | C:\LS32\INDUSTRIALI\tipici x comunicazione\Altuglas BS 110 Typical Altuglas BS 110 Typical |
|---|---|
| File ID: | ALTUGLAS BS.110 Typical |
| Comment 2: | BS 110 Poll 50 2006 |
| Optical model: | Frosted.rfz |
| Start time: | 10;34  27 Apr 2006 |

Differential Volume

Altuglas BS 110 Typical ——

Volume (%) vs Particle Diameter (µm)

**Volume Statistics (Arithmetic)**          Altuglas BS 110 Typical

Calculations from 0.375 µm to 2,000 µm

| Volume: | 100% | | |
|---|---|---|---|
| Mean: | 45.88 µm | S.D.: | 11.06 µm |
| Median: | 45.62 µm | C.V.: | 24.1% |
| D(3,2): | 43.10 µm | | |
| Mode: | 50.22 µm | | |

$d_{90}$: 61.06 µm

| <10% | <25% | <50% | <75% | <90% |
|---|---|---|---|---|
| 31.15 µm | 37.44 µm | 45.62 µm | 53.92 µm | 61.06 µm |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0112719 A
- WO 9714749 A
- US 3345434 A
- US 4876311 A
- EP 1022115 A
- EP 1022115 B1
- WO 2006053984 A

**Littérature non-brevet citée dans la description**

- Refractive indices of polymers. Polymer Handbook. Wiley, 1975, III-241